(19) Europäisches Patentamt
European Patent Office
Office européen des brevets

(11) **EP 2 616 405 B1**

(12) **FASCICULE DE BREVET EUROPEEN**

(45) Date de publication et mention de la délivrance du brevet:
**10.12.2014 Bulletin 2014/50**

(21) Numéro de dépôt: **11773063.0**

(22) Date de dépôt: **12.09.2011**

(51) Int Cl.:
***C03C 21/00*** (2006.01)   ***G01L 5/00*** (2006.01)

(86) Numéro de dépôt international:
**PCT/FR2011/052076**

(87) Numéro de publication internationale:
**WO 2012/035242 (22.03.2012 Gazette 2012/12)**

(54) **FEUILLE DE VERRE**

**GLASSCHEIBE**

**GLASS SHEET**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2010 FR 1057259**

(43) Date de publication de la demande:
**24.07.2013 Bulletin 2013/30**

(73) Titulaire: **Saint-Gobain Glass France**
**92400 Courbevoie (FR)**

(72) Inventeurs:
• **GY, René**
**F-93140 Bondy (FR)**
• **SELLIER, Julien**
**F-75018 Paris (FR)**
• **OBAME, Hugues**
**F-60180 Nogent Sur Oise (FR)**

(74) Mandataire: **Teyssedre, Laurent**
**Saint-Gobain Recherche**
**Département Propriété Industrielle**
**39 Quai Lucien Lefranc**
**93300 Aubervilliers Cedex (FR)**

(56) Documents cités:
**WO-A2-2005/042428     WO-A2-2007/032961**
**GB-A- 1 222 182**

**Description**

L'invention se rapporte au domaine des feuilles de verre minces. Elle concerne plus particulièrement des feuilles de verre minces susceptibles de résister à des chocs violents.

Les feuilles de verre mince sont fréquemment employées comme verre de protection, fenêtre de visualisation ou encore écran de divers dispositifs électroniques, notamment de poche ou portables, tel que par exemple les téléphones intelligents (parfois appelés « smartphones »), les assistants numériques personnels (parfois appelés « PDA »), les appareils photo numériques, les lecteurs multimédia, les ordinateurs etc. Pour des raisons liées au poids, il est également avantageux d'employer des feuilles de verre mince comme verre de couverture de capteurs solaires thermiques ou photovoltaïques.

Les feuilles de verre utilisées dans de tels dispositifs ou applications sont susceptibles d'être fortement sollicitées d'un point de vue mécanique : contacts répétés avec des objets durs et pointus, impacts de projectiles, chutes...

Pour augmenter leur résistance aux chocs, il est connu de créer une zone superficielle en compression et une zone centrale en tension, par des procédés de trempe thermique ou d'échange ionique (que l'on appelle parfois « trempe chimique »). Dans ce dernier cas, la substitution superficielle d'un ion de la feuille de verre (généralement un ion alcalin tel que le sodium ou le lithium) par un ion de rayon ionique plus grand (généralement un ion alcalin, tel que le potassium ou le sodium) permet de créer en surface de la feuille de verre des contraintes résiduelles de compression, jusqu'à une certaine profondeur. Dans l'ensemble du texte, une profondeur correspond, selon une coupe transversale, à une distance entre un point considéré et une surface de la feuille de verre, mesurée selon une normale à ladite surface. De même, dans toute la suite du texte, les contraintes sont parallèles à la surface de la feuille de verre, et sont des contraintes d'épaisseur, au sens où, exception faite des zones de bord, la moyenne des contraintes sur toute l'épaisseur de la feuille de verre est nulle. Les contraintes superficielles en compression sont en effet équilibrées par la présence d'une zone centrale en tension. Il existe donc une certaine profondeur à laquelle se produit la transition entre compression et tension, profondeur appelée « P » dans la suite du texte. Le profil de contrainte correspond au tracé de la contrainte (qu'elle soit de compression ou de tension) selon une coupe transversale en fonction de la distance à une des faces de la feuille de verre, mesurée selon une normale à ladite face.

On connaît du document GB 1 222 182 des feuilles de verre dont l'épaisseur est d'au moins 3,2 mm, ayant subi un échange ionique de sorte que la profondeur en compression est d'au moins 210 $\mu$m.

L'invention a pour but de proposer des feuilles de verre capables de maintenir une résistance mécanique élevée même après avoir été lourdement endommagées, par exemple suite à des chutes répétées. A cet effet, l'invention a pour objet une feuille de verre dont l'épaisseur est d'au plus 2 mm, possédant une zone superficielle en compression obtenue par échange ionique et une zone centrale en tension, telle que la profondeur à laquelle se produit la transition entre compression et tension est d'au moins 100 micromètres, le rapport entre ladite profondeur et ladite épaisseur étant d'au moins 0,1, ladite feuille étant en outre telle que la contrainte à rupture en flexion à un test « anneau sur tripode » est d'au moins 70 MPa, après indentation Vickers sous une charge de 60 N.

Le protocole de mesure de la contrainte à rupture est détaillé plus après, dans la partie du présent texte décrivant les exemples selon l'invention.

La zone superficielle en compression est obtenue par échange ionique. Plus de détails sur ce procédé sont donnés dans la suite de la présente description.

L'épaisseur e de la feuille de verre est de préférence d'au plus 1,5 mm, voire 1,1 mm. L'épaisseur de la feuille de verre est de préférence d'au moins 0,25 mm. Les dimensions latérales de la feuille de verre dépendent de l'utilisation visée. Au moins une dimension est généralement inférieure ou égale à 40 cm, notamment 30 cm, voire 20 cm. La surface de la feuille de verre est généralement d'au plus 0,2 m$^2$, voire 0,1 m$^2$. Dans les applications de verre de couverture pour capteurs solaires, la surface de la feuille de verre sera en revanche généralement d'au moins 1 m$^2$.

La profondeur P à laquelle se produit la transition entre compression et tension est avantageusement d'au moins 150 micromètres, notamment 200 micromètres, voire 300 micromètres et/ou d'au plus 500 micromètres. Les inventeurs ont pu mettre en évidence que de grandes profondeurs P permettaient d'améliorer considérablement la résistance au choc des feuilles de verre, ce qui est contraire à l'idée reçue selon laquelle le renforcement mécanique va de pair avec l'intensité de la contrainte de compression superficielle. L'invention suit ainsi une voie différente de celle généralement suivie, qui consiste à maximiser autant que faire se peut la compression superficielle, au détriment de la profondeur P.

Le rapport P/e entre la profondeur P et l'épaisseur e de la feuille de verre est avantageusement d'au moins 0,15, voire 0,18.

Le profil de contraintes dans l'épaisseur de la feuille de verre est de préférence tel que la contrainte en compression maximale est d'au moins 70 MPa (notamment 80 MPa), la zone soumise à cette contrainte en compression maximale étant située à une distance non-nulle de la surface de la feuille de verre. Le rapport entre cette distance et l'épaisseur e de la feuille de verre est de préférence d'au moins 0,01 et d'au plus 0,1. Un tel profil de contraintes est particulièrement original et permet d'atteindre de très fortes profondeurs P et des rapports P/e extrêmement élevés.

Usuellement en effet, le profil de contraintes est tel que la contrainte maximale est obtenue à la surface de la feuille de verre. Avec les profils usuels, qui pour les longs temps d'échange tendent vers une forme parabolique, le rapport entre la profondeur P et l'épaisseur de la feuille de verre ne peut pas dépasser la valeur de 0,22.

Alternativement ou cumulativement, le profil de contraintes dans l'épaisseur de la feuille de verre est de préférence tel que dans la zone centrale occupant le tiers de l'épaisseur du verre la variation relative de l'intensité de la contrainte en tension est d'au moins 10%, voire 15%. Ce profil original dans la zone centrale pour un verre renforcé par échange ionique, qui diffère du profil habituel, caractérisé par un palier de contraintes en tension dans la zone centrale, permet d'atteindre de plus fortes contraintes maximales de tension sans pour autant augmenter la tendance à la fragmentation en cas de casse.

De tels profils préférés permettent en revanche d'obtenir un rapport entre la profondeur P et l'épaisseur de la feuille de verre de préférence d'au moins 0,2, voire 0,25 ou 0,3. Le rapport P/e sera généralement d'au plus 0,4.

Ces profils préférés présentent également des compressions de surface moindres, communément associées à une plus faible résistance mécanique initiale. Les inventeurs ont toutefois pu démontrer que, contre toute attente, la résistance des produits présentant ces profils de contrainte était en fait nettement améliorée après endommagement, par exemple en cas de choc. La contrainte de compression maximale est ainsi de préférence inférieure ou égale à 300 MPa, voire 200 MPa.

Le profil de contraintes dans l'épaisseur du verre peut être déterminé de manière connue à l'aide d'un microscope polarisant équipé d'un compensateur de Babinet. Une telle méthode est décrite par H. Aben et C. Guillemet, dans « Photoelasticity of glass », Springer Verlag, 1993, pp 65, 123, 124, 146.

Le paramètre K, défini comme étant la racine carrée de l'intégrale dans la zone centrale en tension du carré de la contrainte, est de préférence d'au plus 1,4 $MPa.m^{1/2}$, voire 1,3 $MPa.m^{1/2}$. De la sorte, la feuille de verre présente l'avantage de ne pas fragmenter en cas de rupture. On entend par fragmentation la capacité du verre à se rompre en formant une multitude de petits fragments de verre, voire de particules de verre, susceptibles d'être éjectés. Même lorsque les fragments restent en place, leur petite taille rend la visibilité au travers de la feuille de verre extrêmement faible voire nulle. En limitant la valeur du facteur K, la rupture de la feuille de verre se caractérise au contraire par la présence d'un petit nombre de fissures qui, à défaut d'être esthétiques, ont un moindre impact sur la visibilité et sur la propension à éjecter des fragments.

La contrainte à rupture en flexion « anneau sur tripode » après indentation Vickers sous une charge de 60 N (voire 70 N) est de préférence d'au moins 80 MPa, voire 90 et même 100 MPa.

La contrainte à rupture en flexion « anneau sur tripode » après indentation Vickers sous une charge de 20 N est de préférence d'au plus 300 MPa, voire 200 MPa, et d'au moins 50 MPa. Contre toute attente, le choix de valeurs de contrainte à rupture plus faible après une indentation plus légère s'est révélé sans incidence sur la résistance après endommagement en cas de choc du produit final, le critère réellement discriminant étant la contrainte à rupture pour les indentations plus lourdes.

Le verre est de préférence du type aluminosilicate de lithium ou de sodium. Ce type de verre se prête en effet à l'échange ionique.

Parmi ces verres, un verre préféré est tel que sa composition chimique comprend les oxydes suivants dans les gammes de teneurs pondérales ci-après définies :

| | |
|---|---|
| $SiO_2$ | 55-72%, notamment 60-71% |
| $Al_2O_3$ | 2-15%, notamment 3-12% |
| $Na_2O$ | 9-17%, notamment 10-15% |
| $K_2O$ | 0-12%, notamment 1-10% |
| MgO | 2-13%, notamment 4-12% |
| CaO | 0-2%, notamment 0-1% |
| $B_2O_3$ | 0-1%, notamment 0. |

Ces oxydes représentent de préférence au moins 95%, voire 98% en poids de la composition totale. Ce verre est du type aluminosilicate de sodium, apte à être renforcé par un échange d'ions sodium par des ions potassium.

Un autre verre préféré est tel que sa composition chimique comprend les oxydes suivants dans les gammes de teneurs pondérales ci-après définies :

| | |
|---|---|
| $SiO_2$ | 52-75%, notamment 65-70% |
| $Al_2O_3$ | 15-27%, notamment 18-19,8% |
| $Li_2O$ | 2-10%, notamment 2,5-3,8% |
| $K_2O$ | 0-5%, notamment 0-1% |

(suite)

| | |
|---|---|
| Na$_2$O | 0-5%, notamment 0-1% |
| ZnO | 0-5%, notamment 1,2-2,8% |
| MgO | 0-5%, notamment 0,55-1,5% |
| BaO | 0-5%, notamment 0-1,4% |
| SrO | 0-3%, notamment 0-1,4% |
| TiO$_2$ | 0-6%, notamment 1,8-3,2% |
| ZrO$_2$ | 0-3%, notamment 1,0-2,5% |
| P$_2$O$_5$ | 0-8%. |

Ce verre est du type aluminosilicate de lithium, apte à être renforcé par un échange d'ions lithium par des ions sodium et/ou potassium. La vitesse d'échange de ce type de verre est particulièrement élevée, ainsi que sa résistance à la rayure.

Le verre peut également être de type silico-sodo-calcique, notamment tel que sa composition chimique comprend les oxydes suivants dans les gammes de teneurs pondérales ci-après définies :

| | |
|---|---|
| SiO$_2$ | 60-75 |
| Al$_2$O$_3$ | 0-4 |
| Na$_2$O | 9-18% |
| K$_2$O | 0-5% |
| MgO | 0-10% |
| CaO | 4-15%. |

Ce type de verre peut également subir des échanges ioniques, mais les temps d'échange sont généralement très longs.

L'invention a aussi pour objet :

- un dispositif électronique, notamment de poche ou portable, tel que notamment téléphone intelligent, assistant numérique personnel, appareil photo numérique, lecteur multimédia, ordinateur, tablette, télévision, comprenant au moins une feuille de verre selon l'invention, en tant que verre de protection, fenêtre de visualisation, écran, élément décoratif, transparent ou non.

- un capteur solaire, thermique ou photovoltaïque comprenant au moins une feuille de verre selon l'invention.

L'invention a encore pour objet un procédé d'obtention d'une feuille de verre selon l'invention, comprenant des étapes de fusion du verre, de formage, de découpe et d'échange ionique.

L'étape de formage peut être réalisée par différents procédés par ailleurs connus, tels que le procédé de flottage, dans lequel le verre fondu est déversé sur un bain d'étain en fusion, le laminage entre deux rouleaux, le procédé dit de « fusion-draw », dans lequel le verre fondu déborde d'un canal et vient former une feuille par gravité, ou encore le procédé dit « down-draw » dans lequel le verre fondu s'écoule vers le bas par une fente, avant d'être étiré à l'épaisseur voulue et simultanément refroidi. L'étape de découpe est avantageusement suivie d'une étape de façonnage ou de polissage des bords, avant l'étape d'échange ionique.

L'échange ionique consiste à remplacer une partie des ions alcalins de la feuille de verre par des ions alcalins de plus grand rayon ionique. Les ions alcalins sont généralement le sodium ou le lithium, respectivement partiellement substitués par le potassium ou le sodium. D'autres ions peuvent également être utilisés, tels que les ions rubidium ou césium, voire les ions thallium, argent ou cuivre.

L'échange ionique est avantageusement suivi d'une étape de traitement thermique (en dehors du bain de sel fondu), généralement aux mêmes gammes de températures que celles employées pour l'échange. Ce traitement thermique permet d'augmenter le rapport P/e ou de diminuer l'intensité des contraintes. Il est ainsi possible, notamment pour des verres aluminosilicates de lithium, d'obtenir des rapports P/e élevés en soumettant la feuille de verre mince à des traitements d'échange ioniques très courts (par exemple pour une durée d'au plus 2 heures, voire 1 heure).

L'échange ionique est généralement réalisé en plaçant la feuille de verre dans un bain rempli d'un sel fondu de l'ion alcalin désiré. Une température élevée, mais en-dessous de la température de transition vitreuse du verre à traiter, permet d'amorcer un phénomène d'interdiffusion, impactant d'abord les couches superficielles du verre.

Il est également possible de pratiquer l'échange ionique en déposant une pâte à la surface du verre. L'échange ionique peut aussi être facilité en imposant un champ électrique ou des ultrasons.

Au moins une étape d'échange ionique est de préférence réalisée à l'aide d'un sel de potassium et/ou de sodium fondu choisi parmi les nitrates, les sulfates, les chlorures ou l'un quelconque de leurs mélanges. Un mélange de sel de sodium et de sel de potassium permet de limiter l'intensité des contraintes. Le nitrate de potassium est particulièrement préféré.

La température et le temps d'échange sont à ajuster en fonction de la composition du verre, de son épaisseur, et du profil de contraintes désiré. Les inventeurs ont pu mettre en évidence qu'une augmentation de la température d'échange et du temps d'échange permettait d'augmenter la profondeur P et d'obtenir le profil original décrit précédemment, dans lequel la zone soumise à la contrainte en compression maximale est située à une distance non-nulle de la surface de la feuille de verre, profil qui, rappelons-le, permet d'atteindre des rapports P/e particulièrement élevés, d'au moins 0,2, voire 0,25. Le profil original, dans lequel dans la zone centrale occupant le tiers de l'épaisseur du verre la variation relative de l'intensité de la contrainte en tension est d'au moins 10%, peut quant à lui être également obtenu par une augmentation de la température et du temps d'échange, par l'utilisation d'une feuille de verre plus mince ou encore à l'aide d'un traitement thermique postérieur tel que défini précédemment.

Notamment pour des aluminosilicates de sodium tels que décrits précédemment, la température d'échange est de préférence d'au moins 450°C, voire 480°C. La relaxation structurale en surface autorisée par ces températures élevées permet d'atteindre le profil original susmentionné, en particulier pour des temps d'échange d'au moins 48 heures, voire 72 heures.

Les exemples non limitatifs qui suivent illustrent la présente invention.

Le verre utilisé pour les différents exemples (à l'exception de l'exemple comparatif C4) est un aluminosilicate de sodium possédant la composition pondérale suivante.

| | |
|---|---|
| $SiO_2$ | 62% |
| $Al_2O_3$ | 8% |
| $Na_2O$ | 12,5% |
| $K_2O$ | 9% |
| MgO | 7,5% |
| CaO | 0,5%. |

Des feuilles de verre de cette composition ont été produites par le procédé de flottage à une épaisseur de 3 mm, puis polies afin d'atteindre une épaisseur e d'environ 1 mm. Ces feuilles de verre ont été soumises à divers traitements d'échange ionique, effectués en plongeant la feuille de verre dans un bain de nitrate de potassium fondu. La feuille de verre de l'exemple comparatif C4 possède une composition de type silico-sodo-calcique et une épaisseur de 2 mm.

Le tableau 1 ci-après récapitule pour les différents exemples la température d'échange (en °C) et le temps d'échange (en heures), la profondeur P à laquelle se produit la transition entre compression et tension et le rapport P/e, e étant l'épaisseur de la feuille de verre, ainsi que le paramètre V, qui correspond à la variation relative de contrainte observée dans la zone centrale occupant le tiers de l'épaisseur de la feuille de verre. V est calculé comme la variation maximale de contrainte dans la zone centrale, divisée par le maximum de la contrainte.

Le profil de contrainte, d'où l'on tire les valeurs de P, V, et les valeurs de contraintes, est déterminé à l'aide d'un microscope polarisant équipé d'un compensateur de Babinet.

Tableau 1

| Exemple | Température (°C) | Temps (heures) | P ($\mu$m) | e (mm) | P/e | V (%) |
|---------|------------------|----------------|------------|--------|------|-------|
| C1 | 360 | 32 | 31 | 0, 98 | 0, 03 | 3 |
| C2 | 380 | 24 | 38 | 0, 96 | 0, 04 | 4 |
| C3 | 380 | 34 | 46 | 0, 90 | 0, 05 | 4 |
| C4 | 460 | 432 | 90 | 1, 95 | 0, 05 | 2 |
| 1 | 490 | 24 | 125 | 0, 98 | 0, 13 | 7 |
| 2 | 490 | 48 | 234 | 0, 97 | 0, 24 | 30 |
| 3 | 490 | 72 | 270 | 1, 06 | 0, 25 | 36 |
| 4 | 490 | 96 | 280 | 0, 98 | 0, 29 | 69 |

(suite)

| Exemple | Température (°C) | Temps (heures) | P ($\mu$m) | e (mm) | P/e | V (%) |
|---|---|---|---|---|---|---|
| 5 | 490 | 120 | 309 | 0, 98 | 0, 32 | 69 |
| 6 | 490 | 144 | 315 | 1, 05 | 0, 30 | 71 |
| 7 | 490 | 168 | 320 | 0, 97 | 0, 32 | 108 |

Les exemples C1 à C4 sont des exemples comparatifs.

On peut déduire des résultats du tableau 1 que l'application de températures élevées permet d'accroître considérablement la profondeur P. En augmentant le temps de traitement, le rapport P/e peut dépasser très largement la limite théorique de 0,2.

Le tableau 2 ci-après indique pour chaque échantillon la valeur de la contrainte en tension maximale, la valeur de la contrainte en compression maximale, la valeur du paramètre K et le nombre de fragments obtenus lorsque le verre est cassé. Un nombre élevé est caractéristique d'une fragmentation du verre.

La fragmentation est caractérisée par la densité de fragments après rupture. Pour cela, les éprouvettes sont revêtues d'un film adhésif sur les deux faces. Puis on vient impacter le verre à 1 cm d'un de ses coins, à l'aide d'une pointe carbure et d'un marteau. Le décompte du nombre de fragments se fait à au moins 2 cm du point d'impact, dans un carré de 3 x 3 cm$^2$.

Tableau 2

| Exemple | Contrainte de tension maximale (MPa) | Contrainte de compression maximale (MPa) | K (MPa.m$^{1/2}$) | Nombre de fragments |
|---|---|---|---|---|
| C1 | 33 | > 500 | 1,0 | 1 |
| C2 | 36 | > 500 | 1,1 | 1 |
| C3 | 39 | > 500 | 1,2 | 1 |
| C4 | < 15 | 270 | < 0,4 | 1 |
| 1 | 72 | > 300 | 1,6 | 58 |
| 2 | 74 | > 150 | 1,4 | 17 |
| 3 | 68 | 91 | 1,3 | 1 |
| 4 | 56 | 56 | 0,7 | 1 |
| 5 | 47 | 37 | 0,7 | 2 |
| 6 | 39 | 35 | 0,5 | 1 |
| 7 | 12 | 21 | 0,2 | 1 |

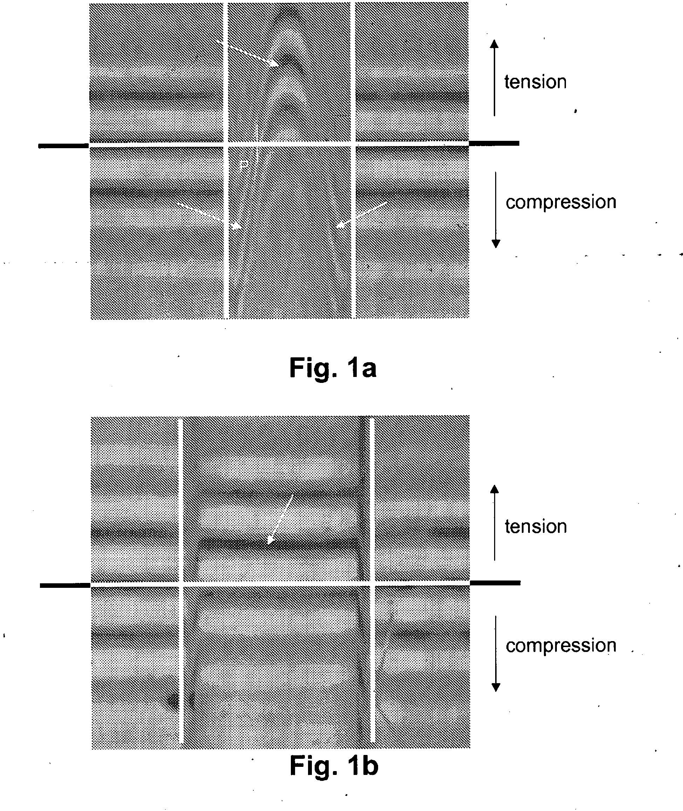

Les Figures 1a et 1b sont des clichés obtenus lors de l'observation de la tranche des feuilles de verre des exemples 3 et C3 à l'aide d'un microscope polarisant équipé d'un compensateur de Babinet. Un tel dispositif, couramment utilisé dans la technique, permet de déterminer le profil de contraintes dans l'épaisseur du verre, c'est-à-dire la valeur de la contrainte en fonction de la profondeur. La forme des franges d'interférence observées à l'aide du dispositif reproduit la distribution de contraintes au coeur de la feuille de verre, tandis que le décalage des franges est proportionnel à l'intensité de la contrainte. Le niveau de référence est fixé arbitrairement sur la frange la plus noire, et la variation de cette frange (indexée sur la figure par les flèches blanches) permet de déterminer le profil de contrainte. Les contraintes en tension correspondent aux franges situées au-dessus du niveau de référence, les contraintes en compression se situant en-dessous. Les franges deviennent difficiles à discerner proche de la surface si le gradient de contrainte est trop important.

La profondeur à laquelle la frange noire traverse le niveau de référence est la profondeur P. Le profil de la feuille de verre de l'exemple 3 est particulièrement atypique, puisqu'il présente un rapport P/e supérieur à 0,22, et une forte variation relative de la contrainte en tension au niveau de la zone centrale, exempte de tout palier. Au contraire, l'exemple comparatif C3 présente un rapport P/e de seulement 0,05, avec une contrainte de tension à coeur quasi constante.

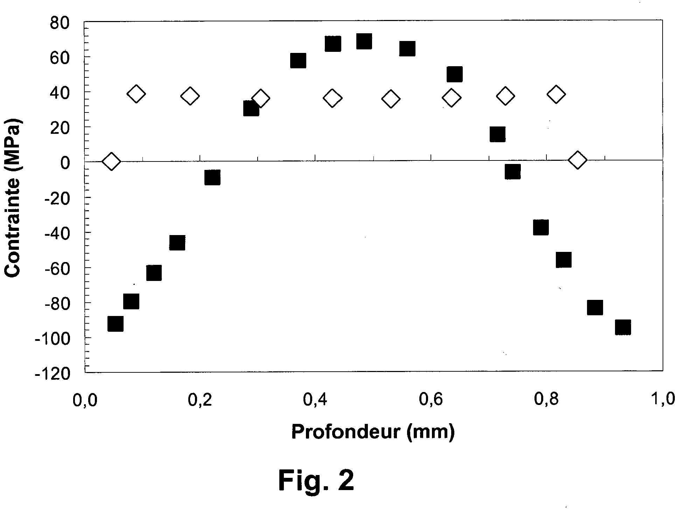

En Figure 2 sont tracés les profils de contraintes pour l'exemple 3 (points en carrés pleins) et pour l'exemple comparatif C3 (points en losanges ajourés). Comme il est d'usage, les contraintes en compression sont négatives tandis que les contraintes en tension sont représentées par des valeurs positives. Les valeurs exactes de la contrainte en compression en extrême surface ne sont pas indiquées car la mesure devient difficile proche de la surface si le gradient de contrainte y est trop important.

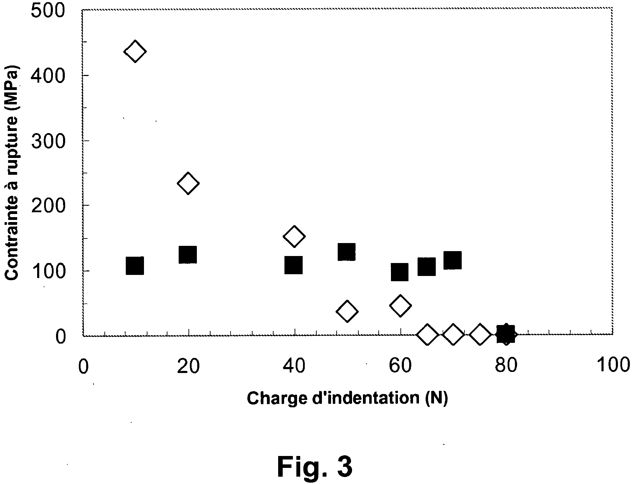

Les résultats des essais sont représentés en Figure 3, laquelle trace la contrainte à rupture au test de flexion « anneau sur tripode » (exprimée en MPa) en fonction de la charge d'indentation Vickers précédemment subie.

La contrainte à rupture en flexion anneau sur tripode après indentation est mesurée de la manière suivante, le résultat étant pris comme la moyenne de 5 essais. Des éprouvettes de 70 x 70 mm$^2$ sont découpées dans une feuille de verre qui n'a subi aucun traitement après sa fabrication. Après échange ionique, les éprouvette sont nettoyées à l'eau et séchées.

Une face quelconque de chaque éprouvette est alors revêtue d'un film adhésif sur une face qui sera mise par la suite en compression. Le rôle de ce film est de permettre la localisation de l'origine de rupture.

L'indentation est réalisée sur la face opposée au film adhésif, à l'aide de poids posés par-dessus une pointe Vickers. L'éprouvette est positionnée sous la pointe de telle sorte que l'indentation soit réalisée au milieu de l'éprouvette, à 1 mm près.

La descente de la pointe sur l'éprouvette est effectuée grâce à une machine Instron 4505 munie d'un capteur de force de 5 kN. En position initiale, la pointe est placée entre 2 et 5 mm au dessus de l'éprouvette. Puis on approche la pointe du verre à une vitesse de 10 mm/min. Après contact entre la pointe et le verre, la force appliquée par la machine devient nulle et seuls les poids posés sur la pointe provoquent l'indentation du verre. L'indentation dure 20 secondes, puis la pointe est remontée par la machine.

Le verre est ensuite entreposé pendant au moins 12 h afin de stabiliser la propagation des fissures. En cas de rupture après indentation mais avant le test de flexion, la contrainte de rupture en flexion est déclarée nulle.

Le test de flexion par anneau sur tripode est réalisé à l'aide d'une machine Instron 4400R, réglée avec une vitesse de descente de la traverse de 2 mm/min, instrumentée avec un capteur de force de 10 kN, d'un anneau de 10 mm de diamètre avec un tore de 1 mm de rayon, fixée en bout de la machine Instron, et d'un socle sur lequel sont collées 3 billes de rayon 5 mm, disposées à 120° sur un cercle de 20 mm de rayon et dont le centre est confondu avec le centre de l'anneau.

L'éprouvette est placée entre ces 3 billes et l'anneau, de telle manière que la marque d'indentation soit alignée avec le centre de l'anneau, à 1 mm près. On applique alors sur l'anneau une force croissante jusqu'à la rupture de l'éprouvette. Seules les éprouvettes dont l'origine de rupture est sous l'anneau sont comptabilisées. La contrainte de rupture en fonction de la force à rupture et de l'épaisseur de l'éprouvette est donnée par la formule suivante :

$$\sigma_{(MPa)} = \frac{0{,}847 \times Force_{(N)}}{épaisseur_{(mm)}^{2}}$$

Les losanges ajourés sont les points mesurés dans le cas de l'exemple comparatif C3, tandis que les carrés pleins correspondent à l'exemple 3 selon l'invention.

On peut voir que, grâce aux plus fortes compressions de surface, l'exemple comparatif C3 présente des contraintes à rupture bien plus élevées dans le cas des faibles indentations. En revanche, cette contrainte à rupture chute de manière vertigineuse lorsque la charge d'indentation augmente, jusqu'à devenir nulle pour des charges supérieures à 60 N. La feuille de verre selon l'invention (exemple 3) présente un comportement très différent, avec une contrainte à rupture constante, de l'ordre de 100 MPa, y compris pour les fortes charge d'indentation, au-delà de 60 N.

Conte toute attente, la contrainte à rupture beaucoup plus faible pour les indentations plus légères ne s'est pas révélée pénalisante pour les propriétés finales de résistance au choc. C'est au contraire le choix particulier de contrainte à rupture pour les indentations les plus lourdes qui peut faire la différence.

## Revendications

1. Feuille de verre possédant une zone superficielle en compression obtenue par échange ionique et une zone centrale en tension, **caractérisée en ce que** son épaisseur est d'au plus 2 mm et **en ce que** la profondeur à laquelle se produit la transition entre compression et tension est d'au moins 100 micromètres, le rapport entre ladite profondeur et ladite épaisseur étant d'au moins 0,1, ladite feuille étant en outre telle que la contrainte à rupture en flexion à un test « anneau sur tripode » est d'au moins 70 MPa, après indentation Vickers sous une charge de 60 N.

2. Feuille de verre selon la revendication précédente, dont l'épaisseur est d'au plus 1,1 mm et d'au moins 0,25 mm.

3.  Feuille de verre selon l'une des revendications précédentes, telle que la profondeur à laquelle se produit la transition entre compression et tension est d'au moins 200 micromètres et d'au plus 500 micromètres.

4.  Feuille de verre selon l'une des revendications précédentes, dont le profil de contraintes dans l'épaisseur de la feuille de verre est tel que la contrainte en compression maximale est d'au moins 70 MPa, la zone soumise à cette contrainte en compression maximale étant située à une distance non-nulle de la surface de la feuille de verre.

5.  Feuille de verre selon l'une des revendications précédentes, dont le profil de contraintes dans l'épaisseur de la feuille de verre est tel que dans la zone centrale occupant le tiers de l'épaisseur du verre la variation relative de l'intensité de la contrainte en tension est d'au moins 10%.

6.  Feuille de verre selon l'une des revendications 4 ou 5, telle que le rapport entre la profondeur à laquelle se produit la transition entre compression et tension et l'épaisseur est d'au moins 0,2 et d'au plus 0,4.

7.  Feuille de verre selon l'une des revendications précédentes, telle que le paramètre K est d'au plus 1,4 MPa.m$^{1/2}$, voire 1,3 MPa.m$^{1/2}$, K étant la racine carrée de l'intégrale dans la zone centrale en tension du carré de la contrainte.

8.  Feuille de verre selon l'une des revendications précédentes, telle que le verre est du type aluminosilicate de lithium ou de sodium.

9.  Feuille de verre selon la revendication précédente, telle que sa composition chimique comprend les oxydes suivants dans les gammes de teneurs pondérales ci-après définies :

| | |
|---|---|
| $SiO_2$ | 55-72%, notamment 60-71% |
| $Al_2O_3$ | 2-15%, notamment 3-12% |
| $Na_2O$ | 9-17%, notamment 10-15% |
| $K_2O$ | 0-12%, notamment 1-10% |
| MgO | 2-13%, notamment 4-12% |
| CaO | 0-2%, notamment 0-1% |
| $B_2O_3$ | 0-1%, notamment 0. |

10. Feuille de verre selon la revendication 8, telle que sa composition chimique comprend les oxydes suivants dans les gammes de teneurs pondérales ci-après définies :

| | |
|---|---|
| $SiO_2$ | 52-75%, notamment 65-70% |
| $Al_2O_3$ | 15-27%, notamment 18-19,8% |
| $Li_2O$ | 2-10%, notamment 2,5-3,8% |
| $K_2O$ | 0-5%, notamment 0-1% |
| $Na_2O$ | 0-5%, notamment 0-1% |
| ZnO | 0-5%, notamment 1,2-2,8% |
| MgO | 0-5%, notamment 0,55-1,5% |
| BaO | 0-5%, notamment 0-1,4% |
| SrO | 0-3%, notamment 0-1,4% |
| $TiO_2$ | 0-6%, notamment 1,8-3,2% |
| $ZrO_2$ | 0-3%, notamment 1,0-2,5% |
| $P_2O_5$ | 0-8%. |

11. Dispositif électronique, notamment de poche ou portable, tel que notamment téléphone intelligent, assistant numérique personnel, appareil photo numérique, lecteur multimédia, ordinateur, tablette, télévision, comprenant au moins une feuille de verre selon l'une des revendications précédentes, en tant que verre de protection, fenêtre de visualisation, écran ou élément décoratif.

12. Capteur solaire, thermique ou photovoltaïque, comprenant au moins une feuille de verre selon l'une des revendications 1 à 10.

13. Procédé d'obtention d'une feuille de verre selon l'une des revendications de feuille de verre précédentes, comprenant des étapes de fusion du verre, de formage, de découpe et d'échange ionique.

14. Procédé selon la revendication précédente, tel qu'au moins une étape d'échange ionique est réalisée à l'aide d'un sel de potassium et/ou de sodium fondu choisi parmi les nitrates, les sulfates, les chlorures ou l'un quelconque de leurs mélanges.

15. Procédé selon la revendication précédente, tel que la température d'échange est d'au moins 450°C, notamment 480°C.

**Patentansprüche**

1. Glasscheibe, die einen durch Ionenaustausch erhaltenen oberflächlichen Druckbereich und einen mittleren Zugbereich besitzt, **dadurch gekennzeichnet, dass** ihre Dicke höchstens 2 mm beträgt und dass die Tiefe, in der der Übergang zwischen Druck und Zug stattfindet, wenigstens 100 Mikrometer beträgt, wobei das Verhältnis zwischen der Tiefe und der Dicke wenigstens 0,1 ist, wobei die Scheibe ferner derart ist, dass die Biegebruchspannung bei einer "Ring auf Dreibein"-Prüfung, nach Vickers-Eindruck unter einer Last von 60 N, wenigstens 70 MPa beträgt.

2. Glasscheibe nach dem vorhergehenden Anspruch, deren Dicke höchstens 1,1 mm und wenigstens 0,25 mm beträgt.

3. Glasscheibe nach einem der vorhergehenden Ansprüche, die derart ist, dass die Tiefe, in der der Übergang zwischen Druck und Zug stattfindet, wenigstens 200 Mikrometer und höchstens 500 Mikrometer beträgt.

4. Glasscheibe nach einem der vorhergehenden Ansprüche, deren Spannungsprofil in der Dicke der Glasscheibe derart ist, dass die maximale Druckspannung wenigstens 70 MPa beträgt, wobei der dieser maximalen Druckspannung ausgesetzte Bereich in einem Abstand ungleich null von der Oberfläche der Glasscheibe gelegen ist.

5. Glasscheibe nach einem der vorhergehenden Ansprüche, deren Spannungsprofil in der Dicke der Glasscheibe derart ist, dass in dem mittleren Bereich, der das Drittel der Dicke des Glases einnimmt, die relative Änderung der Stärke der Zugspannung wenigstens 10 % beträgt.

6. Glasscheibe nach einem der Ansprüche 4 oder 5, die derart ist, dass das Verhältnis zwischen der Tiefe, in der der Übergang zwischen Druck und Zug stattfindet, und der Dicke wenigstens 0,2 und höchstens 0,4 beträgt.

7. Glasscheibe nach einem der vorhergehenden Ansprüche, die derart ist, dass der Parameter K höchstens 1,4 $MPa.m^{1/2}$, sogar 1,3 $MPa.m^{1/2}$ beträgt, wobei K die Quadratwurzel aus dem Integral in dem mittleren Zugbereich des Quadrats der Spannung ist.

8. Glasscheibe nach einem der vorhergehenden Ansprüche, die derart ist, dass das Glas vom Typ Lithium- oder Natrium-Aluminosilikat ist.

9. Glasscheibe nach dem vorhergehenden Anspruch, die derart ist, dass ihre chemische Zusammensetzung die folgenden Oxide in den nachstehend definierten Gewichtsgehaltsbereichen umfasst:

| | |
|---|---|
| $SiO_2$ | 55 - 72 %, insbesondere 60 - 71 % |
| $Al_2O_3$ | 2 - 15 %, insbesondere 3 - 12 % |
| $Na_2O$ | 9 - 17 %, insbesondere 10 - 15 % |
| $K_2O$ | 0 - 12 %, insbesondere 1 - 10 % |
| MgO | 2 - 13 %, insbesondere 4 - 12 % |
| CaO | 0 - 2 %, insbesondere 0 - 1 % |
| $B_2O_3$ | 0 - 1 %, insbesondere 0. |

10. Glasscheibe nach Anspruch 8, die derart ist, dass ihre chemische Zusammensetzung die folgenden Oxide in den nachstehend definierten Gewichtsgehaltsbereichen umfasst:

| | | |
|---|---|---|
| $SiO_2$ | 52 - 75 %, | insbesondere 65 - 70 % |
| $Al_2O_3$ | 15 - 27 %, | insbesondere 18 - 19,8 % |
| $Li_2O$ | 2 - 10 %, | insbesondere 2,5 - 3,8 % |
| $K_2O$ | 0 - 5 %, | insbesondere 0 - 1 % |
| $Na_2O$ | 0 - 5 %, | insbesondere 0 - 1 % |
| ZnO | 0 - 5 %, | insbesondere 1,2 - 2,8 % |
| MgO | 0 - 5 %, | insbesondere 0,55 - 1,5 % |
| BaO | 0 - 5 %, | insbesondere 0 - 1,4 % |
| SrO | 0 - 3 %, | insbesondere 0 - 1,4 % |
| $TiO_2$ | 0 - 6 %, | insbesondere 1,8 - 3,2 % |
| $ZrO_2$ | 0 - 3 %, | insbesondere 1,0 - 2,5 % |
| $P_2O_5$ | 0 - 8%. | |

11. Elektronische Vorrichtung, insbesondere für die Tasche oder tragbar, wie insbesondere Smartphone, Personal Digital Assistant, Digitalkamera, Multimedia-Lesegerät, Computer, Tablet-PC, Fernseher, umfassend wenigstens eine Glasscheibe nach einem der vorhergehenden Ansprüche, als Schutzglas, Sichtfenster, Display oder Zierelement.

12. Solar-, Wärme- oder Photovoltaik-Kollektor, umfassend wenigstens eine Glasscheibe nach einem der Ansprüche 1 bis 10.

13. Verfahren für den Erhalt einer Glasscheibe nach einem der vorhergehenden Glasscheiben-Ansprüche, umfassend Schritte eines Schmelzens des Glases, eines Formens, eines Zuschneidens und eines Ionenaustauschs.

14. Verfahren nach dem vorhergehenden Anspruch, das derart ist, dass wenigstens ein Ionenaustauschschritt mit Hilfe eines geschmolzenen Kalium- und/oder Natriumsalzes, ausgewählt aus den Nitraten, den Sulfaten, den Chloriden oder irgendeiner ihrer Mischungen, durchgeführt wird.

15. Verfahren nach dem vorhergehenden Anspruch, das derart ist, dass die Austauschtemperatur wenigstens 450 °C, insbesondere 480 °C beträgt.

**Claims**

1. A glass sheet, the thickness of which is at most 2 mm, having a surface zone under compression obtained by ion exchange and a central zone under tension, such that the depth at which the transition between compression and tension occurs is at least 100 micrometers, the ratio between said depth and said thickness being at least 0.1, said sheet additionally being such that the flexural stress at break in a "ring-on-tripod" test is at least 70 MPa, after Vickers indentation under a load of 60 N.

2. The glass sheet as claimed in the preceding claim, the thickness of which is at most 1.1 mm and at least 0.25 mm.

3. The glass sheet as claimed in one of the preceding claims, such that the depth at which the transition between compression and tension occurs is at least 200 micrometers and at most 500 micrometers.

4. The glass sheet as claimed in one of the preceding claims, the profile of the stresses of which in the thickness of the glass sheet is such that the maximum compressive stress is at least 70 MPa, the zone subjected to this maximum compressive stress being located at a non-zero distance from the surface of the glass sheet.

5. The glass sheet as claimed in one of the preceding claims, the profile of the stresses of which in the thickness of the glass sheet is such that in the central zone occupying the third of the thickness of the glass, the relative variation of the intensity of the tensile stress is at least 10%.

6. The glass sheet as claimed in either of claims 5 and 6, such that the ratio between the depth at which the transition between compression and tension occurs and the thickness is at least 0.2 and at most 0.4.

7. The glass sheet as claimed in one of the preceding claims, such that the parameter K is at most 1.4 MPa.m$^{1/2}$, or even 1.3 MPa.m$^{1/2}$, K being the square root of the integral in the central zone under tension of the square of the stress.

8. The glass sheet as claimed in one of the preceding claims, such that the glass is of lithium or sodium aluminosilicate type.

9. The glass sheet as claimed in the preceding claim, such that its chemical composition comprises the following oxides in the ranges of weight contents defined below:

| | |
|---|---|
| $SiO_2$ | 55-72%, in particular 60-71% |
| $Al_2O_3$ | 2-15%, in particular 3-12% |
| $Na_2O$ | 9-17%, in particular 10-15% |
| $K_2O$ | 0-12%, in particular 1-10% |
| MgO | 2-13%, in particular 4-12% |
| CaO | 0-2%, in particular 0-1% |
| $B_2O_3$ | 0-1%, in particular 0%. |

10. The glass sheet as claimed in claim 8, such that its chemical composition comprises the following oxides in the ranges of weight contents defined below:

| | |
|---|---|
| $SiO_2$ | 52-75%, in particular 65-70% |
| $Al_2O_3$ | 15-27%, in particular 18-19.8% |
| $Li_2O$ | 2-10%, in particular 2.5-3.8% |
| $K_2O$ | 0-5%, in particular 0-1% |
| $Na_2O$ | 0-5%, in particular 0-1% |
| ZnO | 0-5%, in particular 1.2-2.8% |
| MgO | 0-5%, in particular 0.55-1.5% |
| BaO | 0-5%, in particular 0-1.4% |
| SrO | 0-3%, in particular 0-1.4% |
| $TiO_2$ | 0-6%, in particular 1.8-3.2% |
| $ZrO_2$ | 0-3%, in particular 1.0-2.5% |
| $P_2O_5$ | 0-8%. |

11. An electronic device, in particular a pocket or portable device, such as, in particular, a smartphone, personal digital assistant, digital camera, multimedia player, computer, tablet, television, comprising at least one glass sheet as claimed in one of the preceding claims, as protective glass, viewing window, screen or decorative element.

12. A solar, thermal or photovoltaic sensor, comprising at least one glass sheet as claimed in one of claims 1 to 10.

13. A process for obtaining a glass sheet as claimed in one of the preceding glass sheet claims, comprising glass melting, forming, cutting and ion exchange steps.

14. The process as claimed in the preceding claim, such that at least one ion exchange step is carried out using a molten potassium and/or sodium salt chosen from nitrates, sulfates, chlorides or any mixture thereof.

15. The process as claimed in the preceding claim, such that the exchange temperature is at least 450°C, in particular 480°C.

**Fig. 1a**

**Fig. 1b**

**Fig. 2**

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1222182 A

**Littérature non-brevet citée dans la description**

- **H. ABEN ; C. GUILLEMET.** Photoelasticity of glass. Springer Verlag, 1993, 65, , 123, , 124, , 146